# DEMANDE DE BREVET EUROPEEN

(11) **EP 0 736 696 A1**
(43) Date de publication de la demande: **09.10.1996**
(21) Numéro de dépôt: 96400716.5
(22) Date de dépôt: 03.04.1996
(51) Int. Cl.: F16C 39/06

(54) **Palier magnétique miniature à au moins un axe actif**

(30) Priorité: 07.04.1995 FR 9504163
(71) Demandeur: AEROSPATIALE Société Nationale Industrielle, 75781 Paris Cédex 16 (FR); SEXTANT AVIONIQUE, 78141 Velizy Villacoublay (FR)
(72) Inventeur: Jamain, Patrice, 78580 Maule (FR); Bernus, Christophe, 75018 Paris (FR); Frere, Jean-Yves, 75018 Paris (FR); Boura, André, 86100 Chatellerault (FR); Delaplace, Rémi, 91450 Mennecy (FR)
(74) Mandataire: Rinuy, Santarelli

(57) **Abrégé**

Un dispositif de centrage magnétique, selon un axe de référence Z-Z, d'un second corps (B) mobile par rapport à un premier corps (A) comporte :
- un palier magnétique (10) actif selon l'axe de référence,
- deux centreurs magnétiques (20, 30) décalés axialement, le long de cet axe, de part et d'autre du palier magnétique.

## Description

L'invention concerne un palier magnétique à un axe de centrage magnétiquement actif, combinant un faible encombrement le long de cet axe à des bonnes raideurs aussi bien transversalement à cet axe qu'en basculement transversalement à cet axe.

Cet axe de centrage actif est par exemple l'axe de rotation autour duquel un premier corps ou rotor tourne par rapport à un second corps ou stator. L'invention vise toutefois à prendre également en considération le cas où le corps en mouvement se déplace en translation selon une direction perpendiculaire à l'axe de centrage actif.

Un exemple de palier magnétique actif selon l'axe de rotation d'un rotor par rapport à un stator est donné par le document US-3.955.858 (POUBEAU) dont, par exemple, la figure 21 montre, sur l'un des corps, un aimant annulaire à aimantation radiale enserré entre deux pièces polaires cylindriques concentriques et, sur l'autre des corps, deux bobinages annulaires disposés axialement en regard de l'aimant, de part et d'autre de celui-ci, enserrés au sein de pièces polaires annulaires en forme de C dont les tranches sont en regard des tranches des pièces polaires cylindriques en définissant des entrefers annulaires.

Pour une hauteur (dimension parallèle à l'axe de centrage actif séparant les deux entrefers) suffisamment importante par rapport au diamètre moyen des entrefers, un palier du type précité est généralement stable par rapport à des déplacements radiaux ou en basculement, mais instable suivant l'axe (c'est pour cela que le centrage magnétique doit être actif selon cet axe). Cette instabilité est rattrapée au moyen d'une électronique d'asservissement alimentant en courant de commande les bobines en fonction d'informations sur la position ou la vitesse axiale du rotor, obtenues par un capteur par exemple réalisé auprès des extrémités d'un axe central du rotor.

La miniaturisation d'un tel palier, c'est-à-dire l'obtention de raideurs satisfaisantes en radial, en axial, en basculement, dans un encombrement réduit pose toutefois un problème encore mal résolu.

En effet, on a constaté que l'obtention d'une raideur satisfaisante en radial et en basculement implique généralement qu'un rapport de forme (représentatif d'un rapport entre la longueur entre entrefers et le diamètre moyen de ceux-ci) soit supérieur à une valeur de seuil. En-dessous de ce seuil le basculement devient instable (ce qui peut se comprendre en considérant la somme des couples élémentaires générés auprès des dents bordant les entrefers par les raideurs axiales et radiales à l'endroit de ces entrefers : ce couple peut en arriver à accroître un éventuel basculement accidentel minime).

Il semble en découler qu'une réduction de la hauteur d'un palier doive s'accompagner d'une réduction simultanée de son diamètre.

La difficulté est alors que la réduction du diamètre du palier implique une réduction de la masse d'aimant et donc une capacité d'induction insuffisante pour assurer un bon centrage.

L'invention a pour objet de pallier les inconvénients précités et d'atteindre des performances satisfaisantes en radial et en basculement sans avoir à se préoccuper de la forme (et donc du rapport de forme) de l'espace disponible, dans une application considérée quelconque, pour implanter le palier, mais en tirant au maximum profit de cet espace.

L'invention propose à cet effet un dispositif de centrage magnétique, selon un axe de référence Z-Z, d'un second corps mobile par rapport à un premier corps comportant :
- un palier magnétique actif selon l'axe de référence,
- deux centreurs magnétiques décalés axialement, le long de cet axe, de part et d'autre du palier magnétique.

Selon des enseignements préférés de l'invention, éventuellement combinés :
- le palier magnétique comporte :
   - sur le premier corps, deux paires de portions polaires ferromagnétiques disposées de part et d'autre de l'axe de référence, et des aimants à aimantation transversale à l'axe de référence et enserrés transversalement entre les portions polaires ferromagnétiques desdites paires,
   - sur le second corps, deux paires de portions polaires ferromagnétiques disposées axialement de part et d'autre des portions polaires du premier corps au travers d'entrefers,
   - au moins une bobine à spires transversales à l'axe de référence adapté à générer un flux au travers de l'une des portions polaires,
- il y a deux bobines disposées axialement de part et d'autre des aimants,
- chaque bobine est disposée transversalement entre les portions polaires du premier corps,
- chaque bobine est disposée transversalement entre les portions polaires du second corps,
- les paires de portions polaires et les aimants font partie de couronnes axées sur l'axe de référence, cet axe étant un axe de rotation relative entre les deux corps,
- les portions polaires sont allongées selon une direction de translation perpendiculaire à l'axe de référence et perpendiculaire à la direction suivant laquelle sont disposés les aimants, les bobines étant enroulées autour de noyaux alignés parallèlement à la direction de translation,
- chaque centreur comporte au moins deux paires d'aimants disposées de façon au moins approximativement symétrique de part et d'autre de l'axe de référence, les aimants de chaque paire étant répartis sur les deux corps en sorte d'être en regard, transversalement à l'axe de référence, au travers d'entrefers et ayant des aimantations telles que ces aimants se repoussent au travers de ces entrefers,
- les deux aimants de chaque paire ont l'un vis-à-vis de l'autre un décalage axial non nul, le décalage axial des paires d'aimants d'un centreur étant de sens opposé au décalage axial des paires d'aimants de l'autre centreur,
- les aimants de chaque paire ont des aimantations transversales à l'axe de référence et de sens opposé,
- chaque centreur comporte deux paires de couples d'aimants, les aimants de chaque couple étant contigüs axialement et ayant des aimantations parallèles,
- les aimants de chaque paire ont des aimantations de même sens et parallèles à l'axe de référence,
- chaque centreur comporte deux paires de couple d'aimants, les aimants de chaque couple étant contigüs axialement et ayant des aimantations parallèles,
- chaque centreur est formé de deux couronnes aimantées sensiblement concentriques, l'axe de référence étant un axe de rotation relative entre les deux corps,
- chaque centreur est formé de deux paires de barreaux aimantés allongés selon une direction de translation perpendiculaire à l'aide de référence.

Des objets, caractéristiques et avantages de l'invention ressortent de la description qui suit, donnée à titre d'exemple non limitatif, en regard des dessins annexés sur lesquels :
- la figure 1 est une vue en coupe axiale d'un dispositif de centrage magnétique conforme à l'invention, dans le cas d'un corps tournant,
- la figure 2 est une demi-vue en coupe axiale d'une variante de réalisation du palier magnétique de la figure 1,
- la figure 3 est une demi-vue en coupe axiale d'encore une autre variante de réalisation du palier de la figure 1,
- la figure 4 est une vue partielle en perspective d'un dispositif de centrage magnétique conforme à l'invention, dans le cas d'un corps mobile en translation, et
- la figure 5 est une vue en coupe partielle de ce dispositif, selon le plan de coupe V-V de la figure 4.

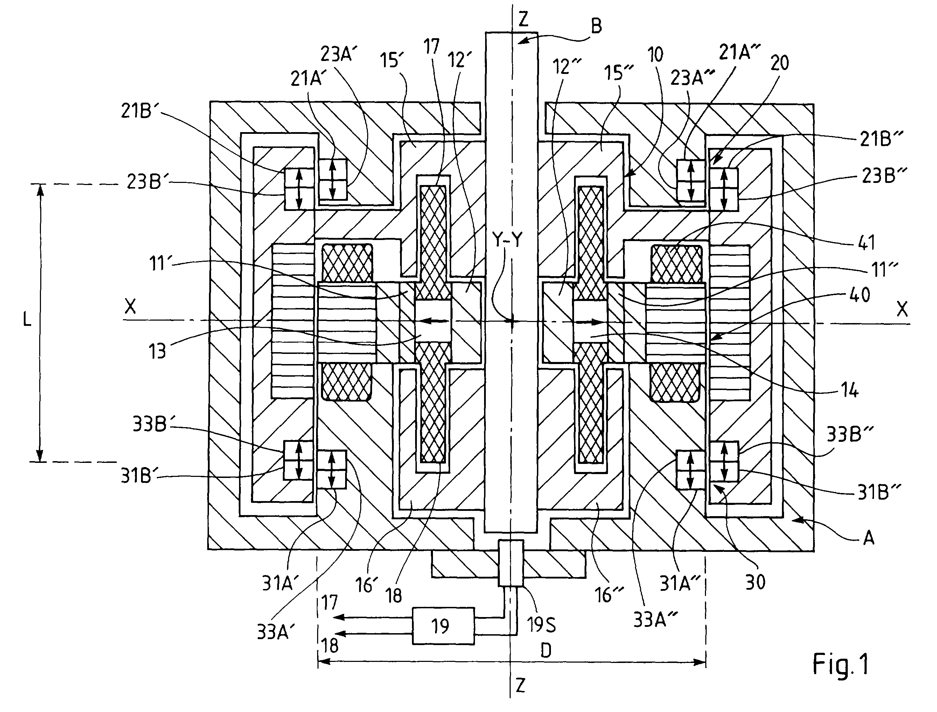

La figure 1 représente un dispositif de centrage magnétique, destiné à centrer magnétiquement de façon active parallèlement à un axe de référence Z-Z, un corps (B) mobile par rapport à un corps A, tout en assurant un centrage passif selon un axe transversal X-X, perpendiculaire à l'axe de référence, et une stabilisation en basculement autour d'un axe Y-Y perpendiculaire aux axes X-X et Z-Z.

Ce dispositif comporte principalement :
- un palier magnétique 10 à un axe actif parallèle à l'axe de référence,
- deux centreurs magnétiques 20 et 30, décalés axialement de part et d'autre du palier magnétique 10, de dimension radiale avantageusement supérieure à celle dudit palier,
- un moteur électromagnétique 40 destiné à commander en mouvement le corps B par rapport au corps A, ici disposé radialement à l'extérieur du palier et axialement entre les centreurs.

Le palier magnétique 10 comprend :
* sur le corps A, deux paires de portions polaires ferromagnétiques 11', 11" et 12' et 12" disposées de part et d'autre de l'axe de référence (indice prime à gauche, indice seconde à droite), et des aimants 13 et 14, à aimantations radiales de sens opposés, enserrés transversalement entre les portions polaires de chaque paire,
* sur le corps B, deux paires de portions polaires ferromagnétiques 15', 15", 16', 16" de section en U, disposées axialement de part et d'autre des portions polaires 11', 11", 12', 12" en ayant leurs tranches en regard des tranches desdites portions polaires du corps A au travers d'entrefers,
* au moins une bobine à spires transversales à l'axe de référence Z-Z et disposées transversalement entre les branches axiales des portions polaires en U portées par le corps B et/ou entre les portions polaires portées par le corps A ; de manière avantageuse il y a deux bobines 17 et 18 disposées axialement de part et d'autre des aimants 13 et 14 ; ces bobines sont alimentées par un circuit d'asservissement en centrage radial selon Z-Z, classique en soi, schématisé en 19 et connecté de façon connue en soi à des capteurs de position, de vitesse ou d'accélération, de tout type connu approprié ; la référence 19S représente à titre d'exemple un capteur de position.

Dans l'exemple représenté, l'axe de référence Z-Z est un axe de rotation relative entre les corps A et B, les portions polaires 11' et 11" font partie d'une même couronne radialement externe, les portions polaires 12' et 12" font partie d'une même couronne radialement interne, les portions 15' et 15" et les portions 16' et 16" font respectivement partie de deux couronnes à section courante en U, les aimants 13 et 14 font partie d'une même couronne à aimantation radiale, ces diverses couronnes étant centrées sur l'axe Z-Z. Quant à elles, les bobines sont circulaires ; comme le mouvement relatif entre A et B est un mouvement de rotation et que les couronnes en U et les bobines sont circulaires, il n'y a aucun problème à ce que ces bobines soient portées par le corps A tout en pénétrant à l'intérieur de ces couronnes en U. Cette disposition a l'avantage de minimiser les fuites magnétiques de l'aimant central.

Le moteur électromagnétique 40 ne fait pas partie en soi de l'invention et ne sera pas décrit en détail. Il est de tout type connu approprié. De préférence, mais pas nécessairement, ses bobines 41 sont portées par le même corps que celui qui porte les bobines du palier 10. Ce même corps est avantageusement le corps fixe A, ce qui facilite les connexions électriques.

Les deux centreurs magnétiques 20 et 30 comportent au moins quatre paires de portions aimantées 21A' et 21B', 21A" et 21B", 31A' et 31B', 31A" et 31B" répartis entre les corps A et B (ce qui est indiqué dans les références par les lettres A ou B).

Les aimants de chaque paire sont, au moins en partie, en regard parallèlement à l'axe X-X, au travers d'entrefers, les aimantations des aimants de chaque paire étant choisies l'une par rapport à l'autre en sorte qu'ils aient tendance à se repousser.

Dans l'exemple représenté, les aimants des centreurs ont des aimantations de même sens, parallèles à l'axe de référence.

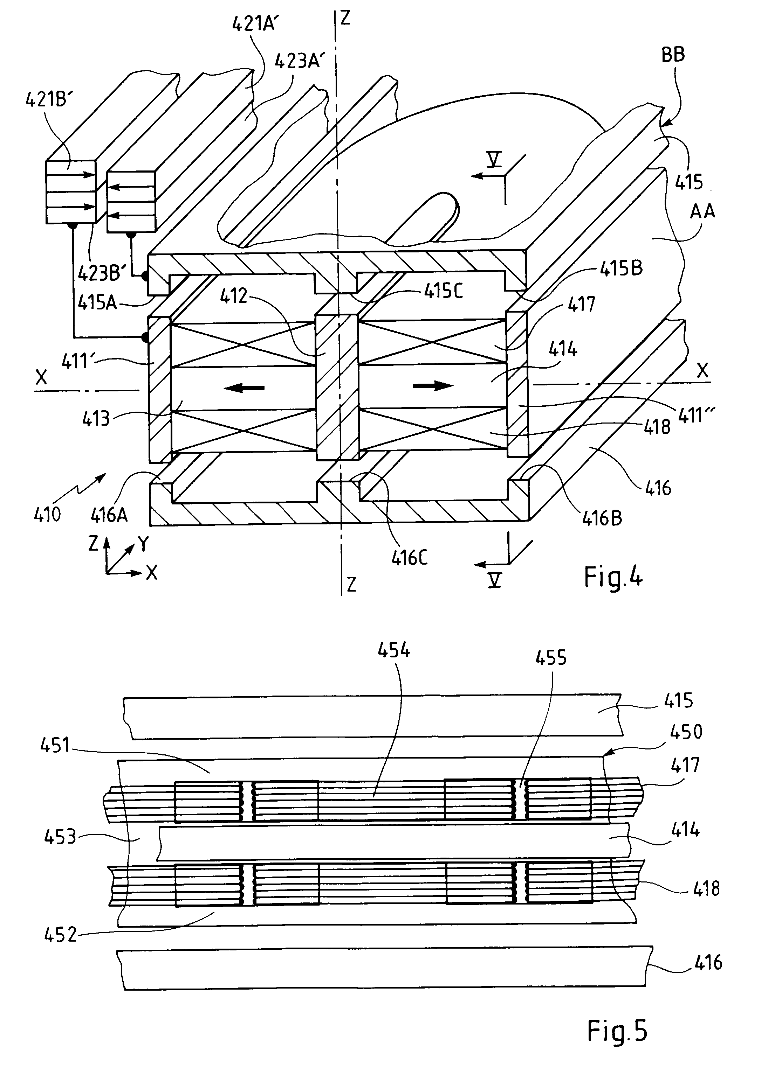

En variante (voir la figure 4) les aimants peuvent avoir, parallèlement à l'axe X-X des aimantation de sens opposés (toutefois la configuration d'aimantation de la figure 1 est plus facile à réaliser dans le cas d'aimants annulaires).

L'intérêt de combiner le palier 10 aux centreurs 20 et 30 est de découpler la fonction de centrage axial actif, assurée par le palier suivant l'axe Z-Z et les fonctions de centrage passif en transversal (suivant X-X) et en basculement (autour de Y-Y), assurées par les centreurs. Il en découle que les conditions de forme indiquées ci-dessus (rapport entre longueur (ou écart) et diamètre) n'ont plus besoin d'être respectées par le palier lui-même, mais simplement par l'ensemble de deux centreurs : il devient alors possible de ne dimensionner le palier qu'en fonction des contraintes d'espace disponible et des exigences en ce qui concerne les performances du centrage axial actif. D'autre part, comme les centreurs peuvent être de faible section, ils peuvent aisément être disposés radialement et axialement à la périphérie du dispositif, permettant ainsi de tirer le meilleur profit possible de l'espace disponible pour le dispositif du point de vue rapport entre longueur et diamètre (on se réfère alors à l'écart axial moyen L et au diamètre D des entrefers de ces centreurs), tout en permettant entre eux l'implantation des divers composants du dispositif.

De manière préférée un décalage axial est introduit entre les aimants de chaque paire 21A' et 21B', 21A" et 21B" .... les décalages axiaux entre ces quatre paires d'aimants étant de même sens de part et d'autre de l'axe de référence Z-Z, et de sens opposés de part et d'autre de l'axe transversal X-X.

Dans l'exemple représenté, ce sont les aimants les plus éloignés de Z-Z qui sont les plus proches de X-X. En variantes non représentées, les décalages sont de sens opposés et les sens d'aimantation peuvent être inverses au sein d'une même paire.

De tels décalages permettent, pour un rapport de forme donné L/D d'améliorer la raideur en basculement, éventuellement au détriment de la raideur transversale selon l'axe X-X.

Il est également avantageux (et cela est valable même en l'absence de décalage axial) de doubler les centreurs et augmenter ainsi les diverses raideurs.

C'est ainsi qu'à la figure 1, à chaque portion aimantée est rapporté axialement une autre portion aimantée (23A' pour l'aimant 21A', 23B' pour l'aimant 21B' ; 23A" pour l'aimant 21A", et ainsi de suite ; 33A' pour l'aimant 31A', etc...).

Compte tenu de ce que cette figure 1 correspond au cas où l'axe Z-Z est un axe de rotation, les portions aimantées constitutives des centreurs font avantageusement partie d'anneaux 21A, 21B, 23A, 23B ; 31B, 33A, 33B.

Il est clair que dans le cas de la figure 1, où les divers éléments sont circulaires, il y a un centrage passif en transversal et en basculement suivant chacun des axes X-X et Y-Y.

A titre d'exemple, le palier a un diamètre de 30 mm et une hauteur de 32 mm, et on appelle Kr la raideur radiale, Kb la raideur en basculement (elles sont positives si la position centrée est une position d'équilibre stable, et négatives sinon). Plusieurs cas sont envisagés :
1 - Palier sans centreur
   * Kr = 15 N/mm
   * Kb = -10 Nm/rad
2 - Palier avec deux centreurs simples sans décalage, les centreurs étant formés chacun de deux couronnes aimantées de section carrée 3 mm x 3 mm :
   * Diamètre extérieur de l'aimant intérieur : 36 mm
   * Diamètre intérieur de l'aimant extérieur : 36,6 mm
   * Espacement axial moyen entre les entrefers : 37 mm
   * L/D = 1,1
   * Kr = 60 N/mm
   * Kb = 2 Nm/rad
3 - Palier avec deux centreurs simples avec décalage (avec les mêmes aimants que dans le cas 2)
   * décalage axial entre les aimants de chaque centreurs = 0,6 mm
   * Espacement axial moyen entre les entrefers : 21,7 mm
   * L/D = 0,68
   * Kr = 40 N/mm
   * Kb = 10 Nm/rad
4 - Palier avec deux centreurs doubles avec décalage (avec des aimants élémentaires de mêmes diamètres que dans les cas 2 et 3 mais dont la dimension axiale n'est que de 2 mm (avec une largeur de 3 mm).
   * Décalage axial (pour chaque centreur élémentaire) = 0,6 mm
   * Espacement axial entre les entrefers : 21,7 mm
   * L/D = 0,76
   * Kr = 82 N/mm
   * Kb = 11,5 Nm/rad

On arrive ainsi à une configuration complète constituée d'un palier central et d'un ensemble de centreurs. Or vu l'encombrement visé, le palier central est tellement réduit que ses raideurs radiales et basculantes seront très faibles comparées à celles des centreurs (Kr = 15 N/mm, dans le cas 1 à comparer avec Kr = 82 N/mm ; de même dans le cas du basculement), d'où l'idée de réduire le palier central en hauteur, au détriment de son rapport L/D. Le rôle de ce palier se trouve donc simplement réduit à celui d'un actionneur, servant à rattraper l'instabilité axiale des centreurs et la sienne propre. On peut même se permettre d'avoir un palier central de raideur radiale quasi-nulle et instable en basculement, tant que la raideur positive des centreurs reste supérieure à celle du palier.

On a ainsi réalisé, dans un encombrement extrêmement réduit (diamètre extérieur : 45 mm, hauteur totale = 32 mm), un ensemble constituant un palier magnétique de raideurs acceptables, stable suivant tous les axes passifs, et qu'il n'aurait pas été possible de réaliser ni avec un ensemble de centreurs seuls ni avec un palier type un axe seul.

De plus, chacun de ces deux constituants (centreur et palier) a été optimisé (décalages axiaux pour le centreurs, longueur réduite pour le palier) de manière à réduire l'encombrement total, en tenant compte des points forts respectifs de chacun. On a ainsi réalisé une symbiose entre deux concepts, permettant d'obtenir un résultat qu'il était impossible d'obtenir avec un seul des deux éléments.

Il est à noter que, puisque le centrage radial est assuré par les centreurs, la forme en U des portions polaires 15', 15", 16' et 16" n'est pas nécessaire ; elles peuvent donc avoir la forme de simples rondelles (sous réserve que les entrefers restent d'épaisseur raisonnable en augmentant par exemple la hauteur des portions 11', 12', 11" et 12").

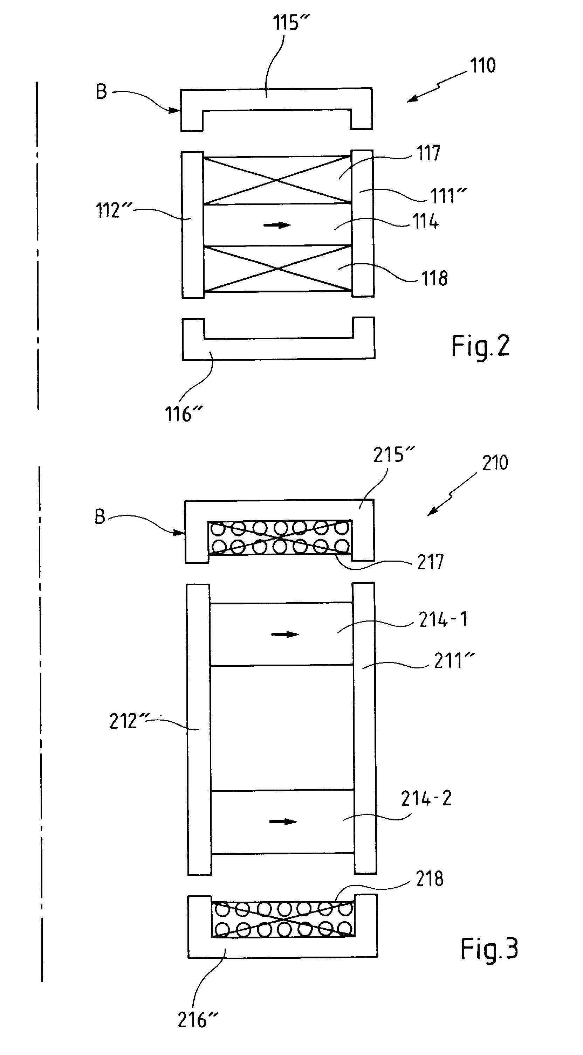

La figure 2 représente une variante de réalisation du palier 10 de la figure 1, désignée par la référence générale 110, dont les éléments analogues à ceux du palier 10 sont désignés par des numéros de référence en découlant par addition du nombre 100. Ce palier se distingue du palier 10 par le fait que les bobines 117 et 118 sont engagées transversalement entre les portions 111" et 112" qui enserrent l'aimant. Une telle configuration est particulièrement bien adaptée au cas où (voir figure 4) l'élément mobile B se déplace en translation selon l'axe Y-Y de la figure 1.

La figure 3 est encore une autre variante du palier 10, désignée par la référence générale 210 et dont les éléments analogues à ceux du palier 10 sont désignés par des numéros de référence qui en découlent par addition du nombre 200. Ce palier se distingue du palier 10 par le fait que l'aimant est dédoublé en deux aimants 214-1 et 214-2 et le fait que les bobines sont liées à l'autre corps B. Les rôles du stator et du rotor peuvent ainsi être inversés.

La figure 4 représente un palier en translation adapté à guider un corps BB, en translation relative par rapport à un corps AA.

Selon un aspect de l'invention original en soi, ce palier 410 a un axe actif Z-Z qui est perpendiculaire à la direction de translation Y-Y, avec des bobinages 417 et 418 qui ont des spires perpendiculaires à cet axe Z-Z et qui sont axialement disposés de part et d'autre de barreaux aimantés 413 et 414, en étant enroulés sur au moins une pièce ferromagnétique centrale 412 formant un noyau ferromagnétique, en étant latéralement longés par deux pièces ferromagnétiques 411' et 411" parallèles à la pièce centrale 412 et à l'axe Z-Z et à la direction de translation.

Le corps BB comporte deux pièces polaires 415 et 416 comportant parallèlement à la direction Y-Y des rebords (ici au nombre de trois et repérés 415A, 415B et 415C) disposés en regard des tranches des pièces 411', 411" et 412 au travers d'entrefers.

Les noyaux 412 peuvent être solidarisés au corps AA par l'intermédiaire des aimants 413 et 414 qui sont enserrés entre ces noyaux et les pièces latérales 411' et 411".

En variante représentée à la figure 5, les noyaux au lieu d'être individualisés peuvent être formés dans une pièce continue 450 comportant entre des portions haute 451 et basse 452 continues et de part et d'autre d'une portion centrale continue 453, une double alternance de portions pleines 454 et creuses 455, les bobinages 417 et 418 étant formés autour des portions pleines en passant au travers des portions creuses. Il en résulte une meilleure tenue mécanique des divers noyaux et une minimisation des variations de flux dues au déplacement.

La configuration d'un tel palier 410 a l'avantage de pouvoir être plus compacte à performances similaires, qu'un palier de guidage en translation à centrage actif parallèlement au plan des spires (cf EP-0.284.487 par exemple) utilisant en pratique des bobinages non pas superposés comme ici, mais décalés parallèlement au plan de leurs spires, ce qui conduit à une dimension selon X-X très supérieure à celle selon Y-Y (ou inversement).

Les rebords 415 A... et 416 A.... permettent un guidage passif selon X-X. Lorsqu'on les supprime, on autorise des déplacements aussi bien selon Y-Y que selon X-X.

Comme dans le cas de la figure 1, le palier 410 de la figure 4 est combiné avec des coupleurs formés de quatre paires d'aimants de préférence dédoublées (seule la double paire des aimants 421B' + 423B' en regard de 421A' + 423A' est représentée) à ceci près que ces aimants ne font plus partie de couronnes, mais ont la forme de barreaux allongés parallèles à la direction de translation. Comme précédemment, il y a avantageusement un décalage 1 selon Z-Z entre les aimants de chaque paire.

Bien entendu la structure même du palier 410 peut faire l'objet de variantes, par exemple par analogie avec le demi-palier de la figure 3.

Il va de soi que la description qui précède n'a été proposée qu'à titre d'exemple non limitatif et que de nombreuses variantes peuvent être proposées par l'homme de l'art sans sortir du cadre de l'invention.

## Revendications

1. Dispositif de centrage magnétique, selon un axe de référence Z-Z, d'un second corps (B, BB) mobile par rapport à un premier corps (A, AA) comportant :
- un palier magnétique (10, 110, 210, 410) actif selon l'axe de référence,
- deux centreurs magnétiques (20, 30) décalés axialement, le long de cet axe, de part et d'autre du palier magnétique.

2. Dispositif selon la revendication 1, caractérisé en ce que le palier magnétique comporte :
- sur le premier corps, deux paires de portions polaires ferromagnétiques (11', 11", 12', 12", 111", 112", 211", 212", 411', 412, 411") disposées de part et d'autre de l'axe de référence, et des aimants (13, 14, 114, 214-1, 214-2, 413, 414) à aimantation transversale à l'axe de référence et enserrés transversalement entre les portions polaires ferromagnétiques desdites paires,
- sur le second corps, deux paires de portions polaires ferromagnétiques (15', 15", 16', 16", 115", 116", 215", 216", 415, 416) disposées axialement de part et d'autre des portions polaires du premier corps au travers d'entrefers,
- au moins une bobine (17, 18, 117, 118, 217, 218, 417, 418) à spires transversales à l'axe de référence adapté à générer un flux au travers de l'une des portions polaires.

3. Dispositif selon la revendication 2, caractérisé en ce qu'il y a deux bobines disposées axialement de part et d'autre des aimants.

4. Dispositif selon la revendication 2 ou la revendication 3, caractérisé en ce que chaque bobine (17, 18, 117, 118, 417, 418) est disposée transversalement entre les portions polaires du premier corps.

5. Dispositif selon la revendication 2 ou la revendication 3, caractérisé en ce que chaque bobine (217, 218) est disposée transversalement entre les portions polaires du second corps.

6. Dispositif selon l'une quelconque des revendications 1 à 5, caractérisé en ce que les paires de portions polaires (11', 11", 12', 12", 111", 112", 211", 212") et les aimants (13, 14, 214-1, 214-2) sont des couronnes axées sur l'axe de référence, cet axe étant un axe de rotation relative entre les deux corps.

7. Dispositif selon l'une quelconque des revendications 1 à 5, caractérisé en ce que les portions polaires (41l', 412, 411") sont allongées selon une direction de translation (Y-Y) perpendiculaire à l'axe de référence et perpendiculaire à la direction (X-X) suivant laquelle sont disposés les aimants (413, 414), les bobines (417, 418) étant enroulées autour de noyaux (412, 454) alignés parallèlement à la direction de translation.

8. Dispositif selon l'une quelconque des revendications 1 à 7, caractérisé en ce que chaque centreur (20, 30) comporte au moins deux paires d'aimants disposées de façon au moins approximativement symétrique de part et d'autre de l'axe de référence, les aimants de chaque paire (21A', 21B' ; 21A", 21B" ; 31A', 31B' ; 31A", 31B" ; 421A', 421B') étant répartis sur les deux corps en sorte d'être en regard, transversalement à l'axe de référence, au travers d'entrefers et ayant des aimantations telles que ces aimants se repoussent au travers de ces entrefers.

9. Dispositif selon la revendication 8, caractérisé en ce que les deux aimants de chaque paire ont l'un vis-à-vis de l'autre un décalage axial non nul, le décalage axial des paires d'aimants (21A', 21B', 21A", 21B", 421A', 421B') d'un centreur (20) étant de sens opposé au décalage axial des paires d'aimants (31A', 31B', 31A", 31B") de l'autre centreur (30) .

10. Dispositif selon la revendication 8 ou la revendication 9, caractérisé en ce que les aimants (421A', 421B') de chaque paire ont des aimantations transversales à l'axe de référence et de sens opposé.

11. Dispositif selon la revendication 10, caractérisé en ce que chaque centreur comporte deux paires de couples d'aimants (421A', 421B', 423A', 423B'), les aimants de chaque couple étant contigüs axialement et ayant des aimantations parallèles.

12. Dispositif selon la revendication 8 ou la revendication 9, caractérisé en ce que les aimants (21A', 21B', 21A", 21B", 31A', 31B', 31A", 31B") de chaque paire ont des aimantations de même sens et parallèles à l'axe de référence.

13. Dispositif selon la revendication 12, caractérisé en ce que chaque centreur comporte deux paires de couple d'aimants, les aimants de chaque couple étant contigüs axialement et ayant des aimantations parallèles.

14. Dispositif selon l'une quelconque des revendications 8 à 13, caractérisé en ce que chaque centreur (20, 30) est formé de deux couronnes aimantées sensiblement concentriques, l'axe de référence étant un axe de rotation relative entre les deux corps.

15. Dispositif selon l'une quelconque des revendications 8 à 13, caractérisé en ce que chaque centreur est formé de deux paires de barreaux aimantés (421A', 421B' ; 423A', 423B') allongés selon une direction de translation perpendiculaire à l'aide de référence.

16. Dispositif selon l'une quelconque des revendications 8 à 15, caractérisé en ce que chaque aimant de chaque paire de chaque centreur est formé de deux aimants élémentaires (21A', 23A' ; 21B', 23B' ; 21A", 23A" ; ....).

17. Dispositif selon la revendication 16, caractérisé en ce que les éléments élémentaires sont au sein de chaque aimant disposés en sorte d'avoir des sens d'aimantation opposés.
